Europäisches Patentamt

European Patent Office

Office européen des brevets

(11) Numéro de publication : **0 449 696 B1**

## (12) FASCICULE DE BREVET EUROPEEN

(45) Date de publication du fascicule du brevet :
**15.06.94 Bulletin 94/24**

(51) Int. Cl.⁵ : **B64C 27/64**

(21) Numéro de dépôt : **91400705.9**

(22) Date de dépôt : **15.03.91**

(54) **Réservoir pour aéronef.**

(30) Priorité : **27.03.90 FR 9003899**

(43) Date de publication de la demande :
**02.10.91 Bulletin 91/40**

(45) Mention de la délivrance du brevet :
**15.06.94 Bulletin 94/24**

(84) Etats contractants désignés :
**DE FR GB IT**

(56) Documents cités :
**DE-C- 896 598**
**GB-A- 6 443**
**GB-A- 2 059 372**
**US-A- 2 731 938**
**US-A- 4 141 311**

(73) Titulaire : **AEROSPATIALE SOCIETE NATIONALE INDUSTRIELLE**
**37, Boulevard de Montmorency**
**F-75016 Paris (FR)**

(72) Inventeur : **Gautier, Lucien Fernand**
**20 bld Lombard**
**F-13015 Marseille (FR)**

(74) Mandataire : **Bonnetat, Christian**
**CABINET BONNETAT**
**23, Rue de St.Pétersbourg**
**F-75008 Paris (FR)**

EP 0 449 696 B1

## Description

La présente invention concerne un réservoir pour aéronef, du type contenant un fluide, tel que de l'huile.

Quoique non exclusivement, le réservoir selon l'invention est plus particulièrement destiné à être installé sur les hélicoptères pour être monté sur le circuit fluidique, par exemple hydraulique, de l'hélicoptère.

Généralement, ces réservoirs sont du type avec mise à l'air libre et sont pourvus d'orifices auxquels sont notamment reliées les conduites d'alimentation et de retour du fluide, qui débouchent dans le fluide contenu dans le réservoir à proximité de son fond. Ces conduites sont par ailleurs reliées, par l'intermédiaire de pompes et de divers composants fluidiques, aux servo-commandes et aux servitudes de l'hélicoptère.

Si de tels réservoirs donnent entière satisfaction lorsque l'hélicoptère effectue des vols dans des configurations usuelles, en revanche, lorsqu'il s'agit de phases de vol sous facteur de charge négatif, ces réservoirs ne présentent plus une garantie maximale de fonctionnement du circuit fluidique.

Les phases de vol sous facteur de charge négatif sont des phases de vol temporaires pour lesquelles l'hélicoptère est soumis à des accélérations négatives, par exemple, lorsqu'il est amené à effectuer des boucles, notamment lors de combats aériens entre hélicoptères, ou lorsqu'il subit de brusques changements de niveaux verticaux.

Dans le premier cas, puisque l'hélicoptère vole temporairement sur le dos, le fluide contenu dans le réservoir, alors renversé, se déplace vers le haut du réservoir qui correspond, à cet instant, au fond de ce dernier. Dans le second cas, le fluide, lors de la brusque chute de l'hélicoptère, a tendance à se déplacer vers le haut du réservoir.

Quelle que soit la phase de vol considérée, les conduites d'alimentation et de retour, qui débouchent à proximité du fond du réservoir, risquent de ne plus être immergées par le fluide, ce qui peut entraîner instantanément le désamorçage des pompes du circuit hydraulique en raison de l'entrée d'air dans les conduites, en engendrant des conséquences nuisibles.

Certes, on pourrait penser à utiliser des réservoirs tels que ceux montés à bord des avions de chasse dont les phases de vol sous facteur de charge négatif sont fréquentes et indispensables. Toutefois, ces réservoirs sont pressurisés de sorte qu'ils impliquent une masse supplémentaire importante, ainsi qu'un surcoût élevé, incompatibles avec les hélicoptères.

Par ailleurs, par le document DE-C-896 598, on connaît déjà un réservoir d'huile pour aéronef, qui est pourvu d'un orifice disposé au voisinage de son fond et dans lequel on prévoit une plaque séparant le réservoir en un compartiment inférieur et en un compartiment supérieur et pourvue d'un trou de passage entre lesdits compartiments. Ainsi, lorsque l'aéronef vole en piqué, le déplacement de l'huile entre le compartiment inférieur et le compartiment supérieur est freiné et ledit orifice reste recouvert d'huile, de sorte que de l'air ne peut pas s'introduire dans ledit orifice.

La présente invention a pour objet un réservoir de ce type, perfectionné pour permettre à l'aéronef des phases de vol sous facteur de charge négatif élevé, avec contrôle du niveau et du déplacement du fluide à l'intérieur dudit réservoir.

A cet effet, selon l'invention, le réservoir pour aéronef, tel que par exemple un hélicoptère, du type contenant un fluide et pourvu d'au moins un orifice qui est situé au voisinage de son fond et auquel est susceptible d'être reliée une conduite d'alimentation ou de retour du fluide, ledit réservoir comprenant, pour permettre audit aéronef d'effectuer des phases de vol temporaires sous facteur de charge négatif, une plaque liée audit réservoir et pourvue d'un passage, pour ralentir le déplacement du fluide contenu dans le réservoir, de façon que le fluide, se déplaçant du fond vers le haut dudit réservoir lors desdites phases de vol temporaires en traversant le passage de ladite plaque de ralentissement, reste en communication avec ledit orifice pendant la durée desdites phases de vol, en évitant l'entrée d'air dans ladite conduite, ladite plaque séparant le réservoir en deux compartiments respectivement inférieur et supérieur, le compartiment inférieur, qui est situé entre le fond du réservoir et ladite plaque et dans lequel est prévu ledit orifice, contenant le fluide, est caractérisé en ce que :

- le passage ménagé dans ladite plaque de ralentissement présente une section calibrée s satisfaisant la formule suivante :

$$s = \frac{S.h}{c.t. \sqrt{2.H. \mid ng \mid}},$$

dans laquelle

s = section totale de passage du fluide, prévue dans la plaque de ralentissement,
S = surface du fond dudit réservoir,
h = hauteur séparant le fond du réservoir de l'orifice,
H = hauteur du fluide contenu dans le réservoir,

2

t    = durée de la phase de vol transitoire sous facteur de charge négatif,

$|ng|$  = valeur absolue du facteur de charge en g négatif, g représentant l'accélération de la pesanteur et n un nombre négatif, et

c    = coefficient tenant compte des frottements dus à la viscosité du fluide lors de la traversée dudit passage ;

- en ce que ladite plaque est sensiblement située au niveau nominal du fluide contenu dans le réservoir ; et
- en ce qu'un hublot est prévu dans la ceinture latérale dudit réservoir, sensiblement au niveau de ladite plaque.

Ainsi, lorsque l'aéronef se trouve dans une phase de vol sous facteur de charge négatif (g négatif), la plaque de ralentissement empêche, en tenant compte des paramètres relatifs à la durée de la phase de vol temporaire, à la valeur du facteur de charge négatif, ainsi qu'à la nature du fluide, le fluide d'être transféré rapidement du fond vers le haut du réservoir pour que, pendant ces phases de vol de courte durée, les conduites d'alimentation et de retour restent constamment immergées dans le fluide. De la sorte, le désamorçage du circuit fluidique est évité. De plus, ledit hublot permet de s'assurer que ledit fluide présente le niveau approprié dans ledit réservoir, tandis que ladite plaque limite les mouvements du fluide dans le réservoir et donc les phénomènes d'émulsion.

Pour limiter encore plus les phénomènes d'émulsion et de capillarité engendrés par les mouvements de l'hélicoptère et donc avoir une lecture fidèle du niveau du fluide, il est avantageux de prévoir un boîtier fixé, en regard dudit hublot, à la ceinture latérale dudit réservoir en délimitant avec celle-ci un volume réduit interne au réservoir, ledit boîtier étant ouvert à son extrémité supérieure, en communiquant avec ledit compartiment supérieur, et comprenant au moins un trou de passage calibré en communication avec le fluide contenu dans le compartiment inférieur du réservoir.

Pour un fluide constitué par une huile minérale légère, le coefficient $\underline{c}$ peut être choisi égal à environ 0,62, si la section totale de passage $\underline{s}$ est petite.

Il est avantageux que, dans ladite plaque soient ménagés plusieurs trous de passage pour le fluide, dont la somme des sections correspond à la section totale de passage $\underline{s}$ du fluide. Ces trous de passage peuvent présenter de plus des sections circulaires identiques.

Par ailleurs, ladite plaque est avantageusement fixée à la ceinture latérale dudit réservoir.

Les figures du dessins annexé feront bien comprendre comment l'invention peut être réalisée. Sur ces figures, des références identiques désignent des éléments semblables.

La figure 1 représente schématiquement le réservoir selon l'invention monté, dans une application préférentielle, sur le circuit de fluide hydraulique d'un hélicoptère.

La figure 2 est une vue en coupe agrandie du réservoir selon l'invention.

La figure 3 est une vue en coupe du réservoir selon la ligne III-III de la figure 2.

La figure 4 représente l'hélicoptère en cours d'exécution d'une phase de vol temporaire sous facteur de charge négatif.

La figure 5 représente le réservoir au cours de la phase de vol de l'hélicoptère, illustrée sur la figure 4, montrant le passage du fluide d'un compartiment à l'autre dudit réservoir au travers des moyens de ralentissement.

La figure 6 est une vue externe d'un mode préféré de réalisation dudit réservoir selon l'invention.

La figure 7 est une vue en coupe du réservoir selon la ligne VII-VII de la figure 6.

La figure 8 est une vue en coupe du réservoir selon la ligne VIII-VIII de la figure 7.

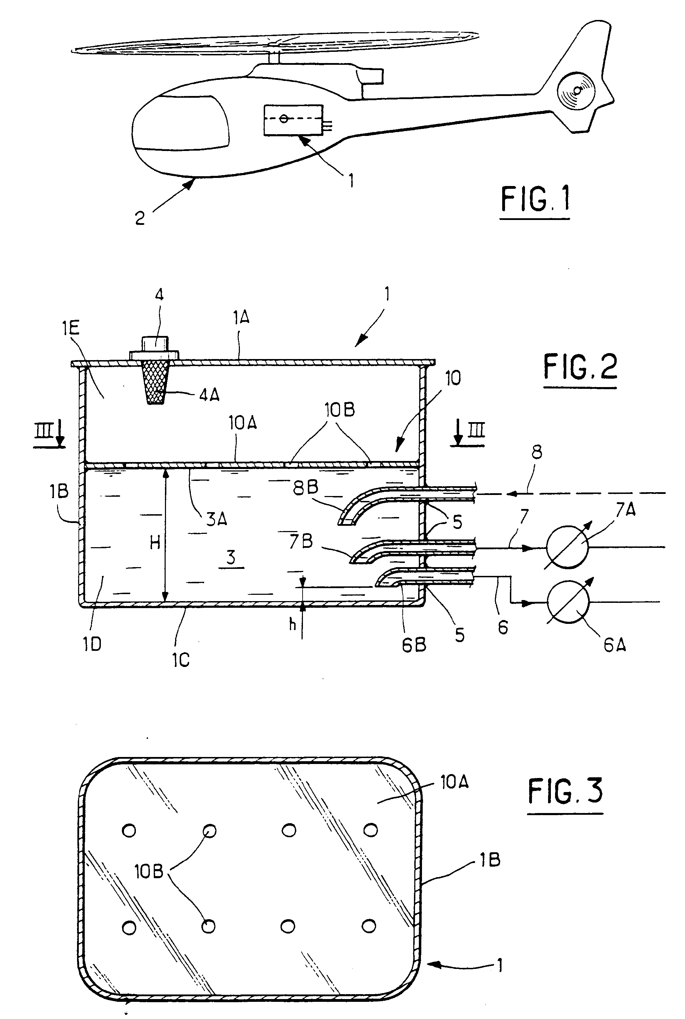

En se référant à la figure 1, le réservoir 1 selon l'invention est, dans cet exemple d'application, monté sur un hélicoptère 2 et il fait partie du circuit hydraulique de l'hélicoptère, destiné à assurer le fonctionnement des servo-commandes et des servitudes, non représentées sur les figures, prévues sur l'hélicoptère.

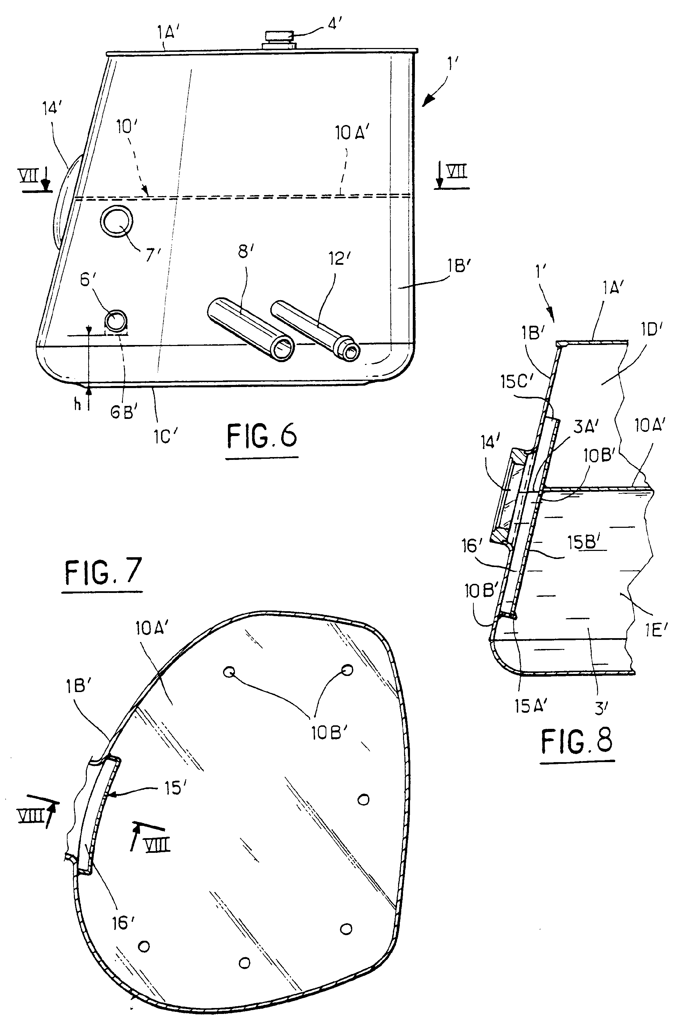

Comme le montre plus particulièrement la figure 2, le réservoir 1, dont la représentation est schématisée, contient un fluide hydraulique 3, tel que de l'huile. Structurellement, le réservoir 1 est réalisé à partir de tôles soudées et présente dans cet exemple une forme parallélépipédique, bien que toute autre configuration soit envisageable, comme on le verra par exemple en regard des figures 6 à 8. A la partie supérieure 1A du réservoir, définissant le haut de celui-ci, est agencé un bouchon 4 destiné au remplissage de l'huile et pourvu d'un filtre 4A, le bouchon 4 assurant, de façon connue en soi, la mise à l'air du réservoir. La ceinture latérale 1B du réservoir est munie d'orifices 5 dont trois sont représentés et auxquels sont reliées les extrémités correspondantes de conduites d'alimentation et de retour du fluide 6,7 et 8 dudit circuit. La liaison des conduites au niveau des orifices s'effectue bien évidemment de façon étanche.

Plus particulièrement, la conduite 6 est une conduite d'aspiration destinée à alimenter en fluide 3 les servo-commandes de l'hélicoptère par l'intermédiaire d'une pompe à débit variable 6A. L'extrémité 6B de la conduite 6 débouche dans le réservoir à proximité du fond 1C de celui-ci à une distance h dudit fond. La conduite 7 est également une conduite d'aspiration destinée à alimenter en fluide les servitudes de l'hélicoptère par l'intermédiaire d'une pompe à débit variable 7A. L'extrémité 7B de la conduite 7, débouchant dans le réservoir 1, est située au-dessus de celle de la conduite 6. Enfin, la conduite 8 est une conduite de refoulement du fluide, destinée au retour du fluide issu des servo-commandes et des servitudes de l'hélicoptère dans le réservoir 1. L'extrémité 8B de la conduite 8 débouchant dans le réservoir 1 est située au-dessus de la conduite 7.

D'autres éléments ou conduites pourraient également être associés au réservoir.

Selon l'invention et dans cette application, pour permettre audit hélicoptère d'effectuer des phases de vol temporaires sous facteur de charge négatif, telles que définies préalablement, le réservoir 1 comprend des moyens 10 pour ralentir le déplacement du fluide 3 à l'intérieur du réservoir 1, de façon que le fluide, se déplaçant du fond 1C vers le haut 1A du réservoir lors de ces phases de vol temporaires, reste en communication pendant la durée des phases de vol avec les extrémités des conduites d'alimentation et de retour du fluide dudit circuit hydraulique, en évitant l'entrée d'air dans celles-ci, susceptible de provoquer le désamorçage des pompes.

Dans le mode de réalisation illustré en regard des figures 2 et 3, les moyens de ralentissement 10 comportent une plaque 10A pourvue d'une pluralité de trous de passage identiques 10B, dont la section est calibrée comme on le verra ultérieurement. Cette plaque 10A est de préférence métallique en étant, par exemple, soudée à la ceinture latérale 1B du réservoir 1. La plaque 10A est fixée parallèlement au fond 1C du réservoir en venant sensiblement affleurer le niveau 3A du fluide 3, qui se situe à une distance H du fond 1C dudit réservoir. Ainsi, la plaque 10A sépare le réservoir 1 en deux compartiments inférieur, 1D, et supérieur 1E, le compartiment inférieur 1D contenant le fluide 3, tandis que le compartiment supérieur 1E contient de l'air.

Le passage du fluide 3 du compartiment 1D au compartiment 1E du réservoir 1, lors des phases de vol temporaires sous facteur de charge négatif dudit hélicoptère, doit se dérouler de façon appropriée pour que l'extrémité 6B de la conduite d'aspiration 6, la plus proche du fond 1C du réservoir, soit toujours immergée par le fluide 3 pour éviter l'entrée d'air dans celle-ci, avec les conséquences néfastes que cela peut engendrer. Par conséquent, le volume de fluide susceptible de passer dans le compartiment 1E à travers les trous 10B de la plaque doit être inférieur au volume du fluide contenu dans le réservoir, compris entre son fond 1C et l'extrémité 6B de la conduite d'aspiration 6. Pour respecter cette condition et pour tenir compte des paramètres relatifs à la durée de la phase de vol temporaire, à la valeur du facteur de charge négatif, ainsi qu'à la nature du fluide en présence, la section totale des trous de passage 10B ménagés dans la plaque, à partir de laquelle on détermine le débit du fluide passant d'un compartiment à l'autre, satisfait selon l'invention la formule suivante :

$$s = \frac{S.h}{c.t.\sqrt{2.H. \, |ng|}} \, ,$$

dans laquelle :

s = section totale des trous de passage du fluide,

S = surface du fond du réservoir,

h = hauteur séparant le fond du réservoir de la conduite d'aspiration la plus proche,

H = hauteur du fluide contenu dans le réservoir,

t = durée de la phase de vol transitoire de l'hélicoptère sous facteur de charge négatif,

$|ng|$ = valeur absolue du facteur de charge en g négatif, g représentant l'accélération de la pesanteur et n un nombre négatif, et

c = coefficient tenant compte des frottements dus à la viscosité du fluide lors de la traversée desdits trous de passage.

Dans le cas où le fluide 3 est une huile minérale légère (masse volumique de l'ordre de 800 kg/m3), le coefficient C est choisi égal à 0,62.

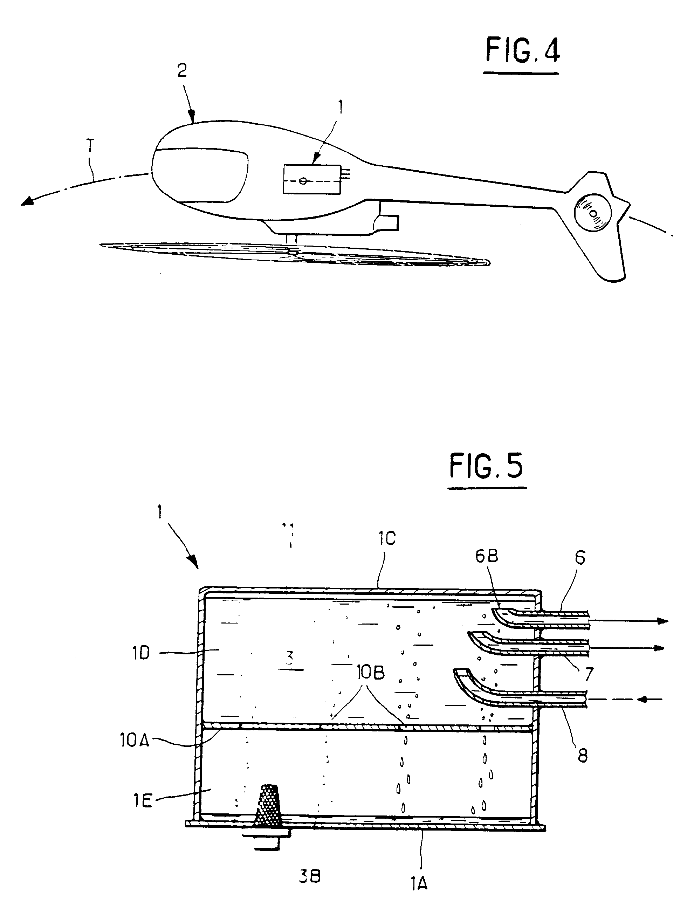

On a représenté sur la figure 4, l'hélicoptère 2 exécutant une phase de vol temporaire sous facteur de charge négatif, telle qu'une boucle, selon la trajectoire T. Dans la position illustrée, l'hélicoptère se trouve sur le dos au sommet de la boucle.

A cet instant, une partie du fluide 3, contenue dans le réservoir alors renversé, s'écoule par les trous de passage calibrés 10B de la plaque 10A du compartiment 1D vers le compartiment 1E en direction de la partie supérieure 1A du réservoir faisant office de fond. Simultanément, de l'air s'introduit par les trous de passage 10B dans le compartiment 1D du réservoir pour s'écouler sous forme de bulles dans le fluide 3 et former une poche d'air 11 entre le fond 3 du réservoir, correspondant alors à son haut, et le niveau du fluide 3.

On voit donc que cette poche d'air 11, dont le volume correspond sensiblement au volume du fluide 3B contenu alors dans le compartiment 1E du réservoir, ne parvient pas au niveau de l'extrémité 6B de la conduite d'aspiration 6, celle-ci étant toujours immergée dans le fluide 3 restant dans le compartiment 1D du réservoir.

Ainsi, grâce à ces moyens de ralentissement 10 prévus dans le réservoir 1, l'hélicoptère peut effectuer, certes pendant une durée relativement brève, des phases de vol sous facteur de charge négatif en toute sécurité.

Lorsque l'hélicoptère 2 termine sa manoeuvre, le volume de fluide 3B retourne dans le compartiment 1D, de même que le volume d'air 11 retourne dans le compartiment 1E du réservoir, correspondant à la figure 2.

Ces trous de passage calibrés 10B, nécessaires pour ralentir le transfert du fluide du compartiment 1D vers le compartiment 1E, permettent également le libre passage du fluide lorsque celui-ci se dilate en fonction de la température. Aussi, lorsque, le débit de retour du fluide par la conduite 8 est momentanément supérieur au débit du fluide aspiré par les conduites 6 et 7, par exemple, lors du fonctionnement du train d'atterrissage, le fluide hydraulique peut librement passer dans le compartiment 1D par les trous de passage.

Par ailleurs, il convient de mentionner un autre avantage de la plaque 10A en ce sens qu'elle permet de diminuer le ballottement du fluide dans le réservoir.

On a représenté sur les figures 6 à 8 un exemple de réalisation du réservoir selon l'invention, destiné à être monté à bord d'un hélicoptère et qui est dans sa conception et dans son fonctionnement analogue au réservoir 1 schématiquement illustré en regard des figures 2,3 et 5.

Ce réservoir 1' est ainsi réalisé à partir de tôles et présente, comme le montre la figure 7, une section sensiblement ovoïdale. Sur sa ceinture latérale 1B' sont raccordées les conduites d'aspiration 6' et 7' du fluide et la conduite de refoulement 8 du fluide. On a représenté en traits pointillés l'arrivée de l'extrémité 6B' de la conduite d'aspiration 6 dans le compartiment 1D' du réservoir, rempli du fluide 3', ainsi que la distance h séparant ladite extrémité 6B' du fond 1C' du réservoir. Les extrémités des autres conduites débouchent au-dessus de l'extrémité 6B' de la conduite 6. Il est également prévu un raccord 12' obturable destiné à être relié à un banc de parc hydraulique permettant la vérification et le contrôle du circuit en fluide hydraulique lorsque l'hélicoptère est au sol, pompes à l'arrêt.

Par ailleurs, à la partie supérieure 1A' du réservoir 1', rapportée par soudure sur la ceinture latérale 1B', est agencé le bouchon de remplissage 4' avec mise à l'air libre.

La plaque 10A' des moyens de ralentissement du fluide 10', qui sépare le réservoir 1' en deux compartiments 1D' et 1E', est disposée de la même façon que précédemment et est pourvue, dans ce cas, de six trous de passage calibrés 10B'.

En se référant plus particulièrement à la figure 8, un hublot 14' est, de plus, prévu dans la ceinture latérale 1B' du réservoir 1', en faisant saillie extérieurement de celle-ci. Ce hublot 14' est situé en correspondance du niveau 3A' de fluide 3' contenu dans le réservoir, et permet ainsi son contrôle.

Toutefois, à cause des phénomènes d'émulsion et de capillarité qui risquent d'apparaître en raison des mouvements du réservoir, et pour avoir une indication juste du niveau de fluide, on prévoit à l'intérieur du réservoir, un boîtier 15' constitué de tôles et soudé en regard du hublot 14' à la ceinture latérale 1B' du réservoir. Ce boîtier 15' délimite, avec la partie de ceinture latérale correspondante, un volume interne réduit 16' rempli de fluide 3', grâce à deux trous de passage calibrés 10B' situés respectivement dans le fond 15A' du boîtier et dans la paroi 15B' de celui-ci à laquelle est soudée en partie la plaque 10A'. Ce trou 10B' est situé juste sous la plaque 10A'. Le boîtier 15' présente une ouverture 15C' à sa partie supérieure, en étant ainsi en communication avec le compartiment supérieur 1D' du réservoir 1'.

Le fluide contenu dans ce volume réduit 16' est ainsi moins soumis aux phénomènes d'émulsion, de sorte que le niveau 3A' de fluide 3 apparaissant au travers du hublot 14' est relativement exact.

**Revendications**

1. Réservoir pour aéronef, tel que par exemple un hélicoptère, du type contenant un fluide (3) et pourvu d'au moins un orifice (5) qui est situé au voisinage de son fond et auquel est susceptible d'être reliée une conduite d'alimentation (6,7) ou de retour (8) du fluide, ledit réservoir (1) comprenant, pour permettre audit aéronef d'effectuer des phases de vol temporaires sous facteur de charge négatif, une plaque (10A) liée audit réservoir et pourvue d'un passage, pour ralentir le déplacement du fluide contenu dans le réservoir, de façon que le fluide, se déplaçant du fond (1C) vers le haut (1A) dudit réservoir lors desdites phases de vol temporaires en traversant le passage de ladite plaque de ralentissement, reste en communication avec ledit orifice pendant la durée desdites phases de vol, en évitant l'entrée d'air dans ladite conduite (6,7,8), ladite plaque séparant le réservoir en deux compartiments respectivement inférieur et supérieur (1D,1E), le compartiment inférieur (1D), qui est situé entre le fond (1C) du réservoir et ladite plaque (10A) et dans lequel est prévu ledit orifice, contenant le fluide (3), caractérisé en ce que :
   - le passage ménagé dans ladite plaque de ralentissement (10a) présente une section calibrée s satisfaisant la formule suivante :

$$s = \frac{S.h}{c.t.\ \sqrt{2.H.\ |\ ng\ |}}\ ,$$

dans laquelle

s = section totale de passage du fluide, prévue dans la plaque de ralentissement,
S = surface du fond dudit réservoir,
h = hauteur séparant le fond du réservoir de l'orifice,
H = hauteur du fluide contenu dans le réservoir,
t = durée de la phase de vol transitoire sous facteur de charge négatif,
$|\ ng\ |$ = valeur absolue du facteur de charge en g négatif, g représentant l'accélération de la pesanteur et n un nombre négatif, et
c = coefficient tenant compte des frottements dus à la viscosité du fluide lors de la traversée dudit passage ;

- en ce que ladite plaque (10A) est sensiblement située au niveau nominal (3A) du fluide contenu dans le réservoir ; et
- en ce qu'un hublot (14') est prévu dans la ceinture latérale (1B') dudit réservoir, sensiblement au niveau de ladite plaque (10A).

2. Réservoir selon la revendication 1,
caractérisé en ce qu'un boîtier (15') est fixé, en regard dudit hublot, à la ceinture latérale (1B') dudit réservoir en délimitant avec celle-ci un volume réduit (16') interne au réservoir, ledit boîtier étant ouvert à son extrémité supérieure, en communiquant avec ledit compartiment supérieur (1E'), et comprenant au moins un trou de passage calibré (10B') en communication avec le fluide contenu dans le compartiment inférieur (1D') du réservoir.

3. Réservoir selon l'une des revendications 1 ou 2, dans lequel ledit fluide est une huile minérale légère,
caractérisé en ce que le coefficient c est égal à 0,62.

4. Réservoir selon l'une des revendications 1 à 3,
caractérisé en ce que, dans ladite plaque (10A), sont ménagés plusieurs trous de passage (10B) pour le fluide, dont la somme des sections correspond à la section totale de passage s du fluide.

5. Réservoir selon la revendication 4,
caractérisé en ce que lesdits trous de passage (10B) présentent des sections circulaires identiques.

6. Réservoir selon l'une des revendications 1 à 5,
caractérisé en ce que ladite plaque (10A) est fixée à la ceinture latérale (1B) dudit réservoir.


**Patentansprüche**

1. Behälter für Luftfahrzeuge, wie zum Beispiel Hubschrauber, des Typs, der eine Flüssigkeit (3) enthält und mit mindestens einer Öffnung (5) versehen ist, die sich in der Nähe seines Bodens befindet und die mit einer Zuleitung (6, 7) oder Ableitung (8) der Flüssigkeit verbindbar ist, wobei der Flüssigkeitsbehälter (1), um dem Luftfahrzeug temporäre Flugphasen bei negativem Lastvielfachen zu ermöglichen, eine Trennwand (10A) umfaßt, die mit dem Flüssigkeitsbehälter verbunden ist und einen Durchlaß aufweist, um die Bewegung der im Flüssigkeitsbehälter enthaltenen Flüssigkeit zu verlangsamen, so daß die Flüssigkeit, die sich während dieser temporären Flugphasen vom Boden (1C) zum oberen Bereich (1A) des Flüssigkeitsbehälters bewegt, wobei sie die Verzögerungstrennwand durchquert, während dieser Flugphasen in Verbindung mit der Öffnung bleibt, und zwar unter Vermeidung von Lufteintritt in die Leitungen (6, 7, 8), wobei die Trennwand den Flüssigkeitsbehälter in jeweils einen unteren bzw. einen oberen Raum (1D, 1E) unterteilt, wobei der untere Raum (1D), der sich zwischen dem Boden (1C) des Flüssigkeitsbehälters und der Trennwand (10A) befindet und in dem die Öffnung vorgesehen ist, die Flüssigkeit (3) enthält, gekennzeichnet dadurch, daß :
- der in der Verzögerungstrennwand ausgesparte Durchlaß (10a) einen kalibrierten Bereich s aufweist, der die folgende Formel erfüllt :

$$s = \frac{S.h}{c.t.\ \sqrt{2.H.\ |ng|}}\ ,$$

in der

s = gesamte ausgesparte Durchgangsfläche für die Flüssigkeit, die in der Verzögerungstrennwand vorgesehen ist,

S = Oberfläche des Bodens des Flüssigkeitsbehälters,

h = Höhe des Abstandes zwischen dem Boden des Flüssigkeitsbehälters und der Öffnung,

H = Höhe des Flüssigkeitsstands der im Flüssigkeitsbehälter
enthaltenen Flüssigkeit

t = Dauer der temporären Flugphase bei negativem Lastvielfachen,

$|ng|$ = Absolutwert des Lastvielfachen bei negativem g, wobei g die Gravitationsbeschleunigung und n eine negative Zahl darstellt, und

c = Koeffizient, der die Reibung aufgrund der Viskosität der Flüssigkeit bei der Durchquerung dieses Durchganges berücksichtigt ;

- die Trennwand (10A) sich deutlich auf dem Nominalstand (3A) der im Flüssigkeitsbehälter enthaltenen Flüssigkeit befindet ; und

- ein Schauglas (14') in der Seiteneinfassung (1B) des Flüssigkeitsbehälters vorgesehen ist, und zwar
deutlich auf der Höhe der Trennwand (10A).

2. Flüssigkeitsbehälter nach Anspruch 1,
dadurch gekennzeichent, daß ein Gehäuse 15' im Blick des Schauglases an der Seiteneinfassung (1B')
des Flüssigkeitsbehälters befestigt ist und mit diesem einen verkleinerten Rauminhalt (16') im Inneren
des Flüssigkeitsbehälters umgrenzt, wobei das Gehäuse an seinem oberen Ende geöffnet ist und mit dem
oberen Raum (1E') in Verbindung steht, und wobei es mindestens ein kalibriertes Durchgangsloch (10B')
umfaßt, das in Verbindung mit der im unteren Raum (1D') des Flüssigkeitsbehälters befindlichen Flüssigkeit steht.

3. Flüssigkeitsbehälter nach Anspruch 1 oder 2, worin die Flüssigkeit ein dünnflüssiges Mineralöl ist,
gekennzeichnet dadurch, daß der Koeffizient c 0,62 entspricht.

4. Flüssigkeitsbehälter nach einem der Ansprüche 1 bis 3,
gekennzeichnet dadurch, daß in der Trennwand (10A) mehrere Durchgangslöcher (10B) für die Flüssigkeit
ausgespart sind, deren Summe der ausgesparten Flächen der ausgesparten Gesamtdurchlauffläche s
der Flüssigkeit entspricht.

5. Flüssigkeitsbehälter nach Anspruch 4,
gekennzeichnet dadurch, daß die Durchgangslöcher (10B) identische kreisförmige ausgesparte Flächen
aufweisen.

6. Flüssigkeitsbehälter nach einem der Ansprüche 1 bis 5,
gekennzeichnet dadurch, daß die Trennwand (10A) an der Seiteneinfassung (1B) des Flüssigkeitsbehälters befestigt ist.

## Claims

1. Tank for aircraft, such as a helicopter for example, of the type containing a fluid (3) and provided with at
least one orifice (5) which is situated in the vicinity of its bottom and to which a feed (6, 7) or return (8)
pipe for the fluid is able to be connected, the said tank (1) comprising, in order to allow the said aircraft
to carry out temporary phases of flight under a negative load factor, a plate (10A) linked to the said tank
and provided with a passage, for slowing down the displacement of the fluid contained in the tank, in such
a way that the fluid, being displaced from the bottom (1C) towards the top (1A) of the said tank during
the said temporary phases of flight by passing through the passage in the said slowing plate, remains in
communication with the said orifice throughout the duration of the said phases of flight, avoiding the entry
of air into the said pipe (6, 7, 8), the said plate separating the tank into two, respectively lower and upper
(1D, 1E), compartments, the lower compartment (1D), which is situated between the bottom (1C) of the
tank and the said plate (10A) and in which the said orifice is provided, containing the fluid (3),
characterized in that:
- the passage formed in the said slowing plate (10A) exhibits a calibrated cross-section s, satisfying
the following formula:

$$s = \frac{S.h}{c.t. \sqrt{2.H. \mid ng \mid}} ,$$

in which

| | |
|---|---|
| s | = total cross-section for passage of the fluid, provided in the slowing plate, |
| S | = surface area of the bottom of the said tank, |
| h | = height separating the bottom of the tank from the orifice, |
| H | = height of the fluid contained in the tank, |
| t | = duration of the transient flight phase under a negative load factor, |
| $\mid ng \mid$ | = absolute value of the load factor in negative g, g representing the acceleration due to gravity and n a negative number, and |
| c | = coefficient taking account of friction due to the viscosity of the fluid upon passing through the said passage; |

- in that the said plate (10A) is situated substantially at the nominal level (3A) of the fluid contained in the tank; and
- in that a sight glass (14′) is provided in the lateral belt (1B′) of the said tank, substantially at the level of the said plate (10A).

2. Tank according to Claim 1, characterized in that a box (15′) is fixed, facing the said sight glass, to the lateral belt (1B′) of the said tank, delimiting with the belt a restricted volume (16′) internal to the tank, the said box being open at its upper end, communicating with the said upper compartment (1E′), and comprising at least one calibrated passage hole (10B′) in communication with the fluid contained in the lower compartment (1D′) of the tank.

3. Tank according to one of Claims 1 or 2, in which the said fluid is a light mineral oil, characterized in that the coefficient c is equal to 0.62.

4. Tank according to one of Claims 1 to 3, characterized in that, in the said plate (10A), are formed several passage holes (10B) for the fluid, the sum of the cross-sections of which corresponds to the total cross-section s for passage of the fluid.

5. Tank according to Claim 4, characterized in that the said passage holes (10B) exhibit identical circular cross-sections.

6. Tank according to one of Claims 1 to 5, characterized in that the said plate (10A) is fixed to the lateral belt (1B) of the said tank.

FIG.1

FIG.2

FIG.3

## FIG.4

## FIG.5

FIG.6

FIG. 7

FIG.8